(19) **Europäisches Patentamt**
**European Patent Office**
**Office européen des brevets**

(11) **EP 3 528 940 B1**

(12) **EUROPEAN PATENT SPECIFICATION**

(45) Date of publication and mention of the grant of the patent:
**30.04.2025 Bulletin 2025/18**

(21) Application number: **17787434.4**

(22) Date of filing: **24.10.2017**

(51) International Patent Classification (IPC):
**B01J 19/12** (2006.01)     **B01J 12/00** (2006.01)

(52) Cooperative Patent Classification (CPC):
**B01J 19/127; B01J 19/123;** B01J 12/00;
B01J 12/007; B01J 2219/0875; B01J 2219/0892;
B01J 2219/0894; B01J 2219/1943; B01J 2219/1944

(86) International application number:
**PCT/EP2017/077132**

(87) International publication number:
**WO 2018/077858 (03.05.2018 Gazette 2018/18)**

(54) **GAS PHASE PHOTOCATALYTIC REACTOR FOR FAST AND EFFICIENT POLLUTANT DEGRADATION**

FOTOKATALYTISCHER GASPHASEN-REAKTOR ZUM SCHNELLEN UND EFFIZIENTEN ABBAU VON SCHADSTOFFEN

RÉACTEUR PHOTOCATALYTIQUE EN PHASE GAZEUSE POUR DÉGRADATION DE POLLUANTS RAPIDE ET EFFICACE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.10.2016 GB 201617946**

(43) Date of publication of application:
**28.08.2019 Bulletin 2019/35**

(73) Proprietors:
• **Universiteit Antwerpen**
  **2000 Antwerpen (BE)**
• **Nutara Environment BV**
  **2500 Lier (BE)**
• **Katholieke Universiteit Leuven**
  **3000 Leuven (BE)**

(72) Inventors:
• **GOEMANS, Marcel**
  **3010 Leuven (BE)**
• **BLOMMAERTS, Natan**
  **2550 Kontich (BE)**
• **VERBRUGGEN, Sammy**
  **2930 Brasschaat (BE)**

• **LENAERTS, Silvia**
  **2600 Berchem (BE)**
• **MARTENS, Johan**
  **3040 Huldenberg (BE)**

(74) Representative: **Winger**
**Mouterij 16 bus 101**
**3190 Boortmeerbeek (BE)**

(56) References cited:
EP-A1- 1 415 707     EP-A1- 1 435 263
WO-A1-98/05595       DE-A1- 19 956 290
US-A- 3 554 887      US-B1- 6 558 639

• ASAPU ET AL.: "Silver-polymer core-shell nanoparticles for ultrastable plasmon- enhanced photocatalysis", APPLIED CATALYSIS B: ENVIRONMENTAL, vol. 200, 27 June 2016 (2016-06-27), pages 31 - 38, XP029715601
• SANO T ET AL: "Degradation of toluene and acetaldehyde with Pt-loaded TiO"2 catalyst and parabolic trough concentrator", SOLAR ENE, PERGAMON PRESS. OXFORD, GB, vol. 77, no. 5, 10 May 2004 (2004-05-10), pages 543 - 552, XP004609906, ISSN: 0038-092X, DOI: 10.1016/ J.SOLENER.2004.03.018

**Description**

**Field of the invention**

The invention relates to the field of gas phase photocatalytic reactors and methods for degrading pollutants in a gas phase.

**Background of the invention**

Photocatalysis is a promising technology for pollution abatement in aqueous and gaseous environment, especially degradation of volatile organic compounds (VOC). The photocatalytic process is based on light-induced generation of electron-hole pairs that initiate oxidation and reduction reactions of pollutants on the catalyst surface. Typically, photocatalytic reactors for air purification are based on the immobilization of the catalyst onto a surface. An ideal photoreactor for air purification should have (1) an appropriate light source irradiating the catalyst surface, (2) the catalyst coating should have a large surface area to ensure availability of many active sites, (3) high mass transfer and (4) low pressure drop. The most widely used gas phase photocatalytic reactors are the flat plate reactor and the annular reactor. The flat plate reactor is one of the most straightforward geometries and consists of a coated flat substrate that is illuminated from the top by UV lamps. The airflow runs parallel to the flat plate. Advantages of this type of reactor are simplicity and small pressure drop. A big disadvantage is that only a small reaction area can be achieved. The annular type reactor is built up from two concentric cylinders resulting in an annular gap. The catalyst is coated on the interior wall(s) of the cylinder(s) and the light source is usually positioned longitudinally in the center of the reactor. Also for this geometry the small reaction area remains an important disadvantage. More complex reactor types have also been developed and include for example a monolith reactor. This reactor contains a certain number of channels and provides a large catalyst surface area and a low pressure drop. The major drawback of this type is the top irradiation that is insufficient, and results in a limited reaction rate.

EP1435263A1 discloses a material that is able to selectively inactivate a specific biologically harmful substance through photocatalysis. Moreover, it describes in one embodiment a photocatalytic treatment unit comprising-on an outer peripheral region of a light source-a plurality of columns connected together tail-to-head in a series via infusion tubes. Each column is formed in a long thin hollow cylindrical shape from an optically transparent material that transmits ultraviolet radiation relatively well. The columns are detachably installed with the axial directions thereof aligned in the vertical direction.

EP1415707A1 discloses a microfluidic reactor including at least one reaction cell for a photocatalytic reaction. The at least one reaction cell includes at least one channel having an inlet port, an outlet port and a surface transparent to actinic radiation. A photoactive catalyst is disposed within the at least one channel.

US6558639B1 discloses a purifier for purifying a fluid by eliminating contaminants from the fluid. The purifier includes a fluid passage, through which the fluid flows, formed by an ultraviolet ray transmitting material. A plurality of photocatalytic pipes are arranged in the fluid passage. Each of the photocatalytic pipes has an inner surface and an outer surface on which a thin film of a photocatalyst is applied. The photocatalytic thin film is excited by ultraviolet rays irradiated from a source located near the fluid passage, thereby oxidizing and decomposing the contaminants and purifying the fluid.

Asapu et al. (ASAPU, Ramesh, et al. Silver-polymer core-shell nanoparticles for ultrastable plasmon-enhanced photocatalysis. Applied Catalysis B: Environmental, 2017, 200: 31-38.) disclosed silver-polymer core-shell nanoparticles prepared using the layer-by-layer (LbL) technique. The metallic silver core is encapsulated with an ultra-thin protective shell that prevents oxidation and clustering without compromising the plasmonic properties. The particles are used to prepare a plasmonic Ag-TiO$_2$ photocatalyst.

**Summary of the invention**

It is an object of embodiments of the present invention to provide good systems and methods for photocatalytic gas phase pollutant degradation.

It is an advantage of embodiments of the present invention that it provides a homogeneous light distribution over the entire reactor.

It is an advantage of embodiments of the present invention that an intense contact between pollutants and the catalyst surface is allowed.

It is an advantage of embodiments of the present invention that a large reaction area is provided in the reactor.

It is an advantage of embodiments of the present invention that pollutants in high concentrations can be degraded efficiently.

It is an advantage of embodiments of the present invention that it provides high pollutant degradation efficiency.

It is an advantage of embodiments of the present invention that a very compact reactor can be obtained.

The above objective is accomplished by a method and device according to the present invention.

The invention is set out in the appended set of claims.

It is an advantage of embodiments of the present invention that removal of volatile hazardous particles from air can be obtained by photocatalytic destruction.

It is an advantage of embodiments of the present invention that a compact design is provided that allows making use of natural light e.g. sun light and/or make use of a planar, e.g. flat planar radiation source.

It is an advantage of embodiments of the present invention that the configurations provided allow to use direct sunlight and therefore allow to use a sustainable energy source.

The reactor may be a glass reactor or a reactor made of any other UV-VIS transparent material. Advantageously, the reactor deteriorates not by the reaction caused.

The photocatalytic material may be any of $TiO_2$, ZnO, $WO_3$ or composite materials containing a combination of these oxides.

The coating on the reactor furthermore may comprise nanostructures comprising metals such that the nanostructures display surface plasmon resonance effects.

The nanostructures may comprise metals are nanostructures comprising any of Ag, Au, Cu, Pd, Pt or a combination thereof.

The nanostructures may be covered by a polymeric shell comprising at least one layer of polymer.

The polymeric shell may comprise at least one layer of polyelectrolytes.

The layer may comprise at least poly(allylamine hydrochloride) (PAH) and/or PAA.

The device may comprise Ag nanostructures and $TiO_2$ photocatalytic material.

The device furthermore may comprise a mirroring surface positioned at one side of the reactor tube for reflecting radiation towards the reactor tube. The present invention also relates to a photocatalytic reactor system comprising a device for providing photocatalytic reaction as described above.

The system may comprise a plurality of devices for providing photocatalytic reaction as described above, the devices for providing photocatalytic reaction being arranged parallel to each other.

The reactor tubes of the different devices for providing photocatalytic reaction may be interconnected with each other so as to form a single reactor tube.

The system furthermore may comprise a substantially planar radiation source for irradiation the reactor tube. In between the devices for providing photocatalytic reaction planar radiation sources may be positioned.

Use of a system as described above for photocatalytic gas phase pollutant degradation based on sunlight.

Use of a system as described above for photocatalytic gas phase pollutant degradation The system furthermore comprises a source of UV light adapted for illuminating the substrate. It is an advantage of embodiments of the present invention that an energy efficient photocatalytic reactor is obtained which can work at room temperature.

It is an advantage of embodiments of the present invention that efficient capture of light from the source can be obtained.

The surface for providing photocatalytic reaction further may comprise Au or Ag or Cu or Pt or Pd particles or their combinations, for allowing photocatalysis using the whole light spectrum.

The present invention also relates to a method of obtaining a catalytic surface, the method comprising the steps of

  providing a substrate transparent to light, the substrate comprising a surface, and
  depositing nanostructures and a photocatalyst on the substrate as a catalyst for photocatalytic gas phase pollutant degradation, the nanostructures being nanostructures comprising metals such that the nanostructures display surface plasmon resonance effects.

In some embodiments, the photocatalyst may be any of $TiO_2$, ZnO, $WO_3$ or composite materials containing a combination of these oxides and/or the nanostructures may comprise metals are nanostructures comprising any of Ag, Au, Cu, Pd, Pt or a combination thereof.

The latter may include a deposition wherein a mixture of a photocatalyst, e.g. $TiO_2$, and said nanostructures, e.g. Ag comprising nanostructures, are deposited in a single coating or wherein at least a layer comprising the catalyst, e.g. $TiO_2$, and at least a layer comprising said nanostructures, e.g. Ag comprising nanostructures, is deposited. A multi-stack of alternating layers also may be deposited.

The application of said nanostructures, e.g. Ag comprising nanoparticles, e.g. gold/silver modified nanoparticles, result in a modified glass spiral reactor offering an attractive solution for photocatalytic air purification with high degradation efficiencies at short gas residence times compared to conventional reactor geometries of the same dimensions and catalyst loading.

Depositing nanostructures and a photocatalyst may comprise

- providing a photocatalyst coating on the substrate,
- obtaining nanostructures, e.g. nanostructures comprising Ag, the nanostructures being covered by a polymeric shell, the shell comprising at least one polymeric layer, and
- providing a further coating on the substrate with the nanostructures.

It is an advantage of embodiments of the present invention that a stable nanostructure coating is obtained, avoiding oxidation and/or clustering of the nanostructures.

Providing a photocatalyst coating, e.g. a TiO2 coating, may comprise providing a liquid suspension comprising the photocatalyst, e.g. TiO2, on the surface of the substrate and subsequently evaporating the liquid. Alternatively for example also sol-gel methods may be applied.

Providing a photocatalyst, e.g. TiO2 coating, may comprise providing a coating such that the light transmission through a single coated substrate surface is at least 10%, at most 90%, for example about 50%.

It is an advantage of embodiments of the present invention that the substrate can be kept substantially transparent.

Obtaining nanostructures may comprise obtaining the nanostructures, e.g. Ag comprises nanostructures, with at least one layer of polyelectrolytes. It is an advantage of embodiments of the present invention that this polymer layer protects the nanostructures, e.g. silver comprising nanostructures, from oxidation and clustering. The polyelectrolytes may be polycations or polyanions. The polymers may comprise poly(acrylic acid) (PAA), poly(allylamine hydrochloride) (PAH), or a combination thereof. Another example is PSS. It is an advantage of embodiments of the present invention that these ionic polymers are inexpensive.

It is an advantage of embodiments of the present invention that this polymer layer is sufficiently thin so enhanced electromagnetic fields induced by surface plasmon resonance effects of the metal nanostructures protrude beyond the polymer shell. The shell thickness can be varied from one polymer layer and should not exceed a total thickness of 5 nm.

Coating the nanostructures may comprise coating the nanostructures with four polymer layers. The number of layers may be selected such that the optical properties of the capped silver nanoparticles are such that the plasmon resonance effect matches very well the peak intensity wavelength of the lamp used.

Obtaining coated nanostructures comprises providing layer-by-layer (LbL) deposition of polymers on the nanostructures. An advantage of the layer by layer technique is that sub-nanometer control over the layer thickness can be achieved.

The nanostructures comprising Ag may be round nanostructures comprising Ag. It is an advantage of embodiments of the present invention that no functionalization is necessary. It is a further advantage that layer-by-layer deposition can be obtained from an aqueous solution, with no need to provide buffer solution.

The present invention also relates to a substrate transparent to light comprising a surface suitable for providing photocatalytic reaction, the surface comprising nanostructures, e.g. Ag comprising nanostructures, and a photocatalyst, e.g. a $TiO_2$, as a catalyst for photocatalytic gas phase pollutant degradation, the nanostructures being nanostructures comprising metals such that the nanostructures display surface plasmon resonance effects.

The photocatalyst may be any of $TiO_2$, ZnO, $WO_3$ or composite materials containing a combination of these oxides and/or the nanostructures comprising metals may be nanostructures comprising any of Ag, Au, Cu, Pd, Pt or a combination thereof.

The substrate may be at least partially coated with the photocatalyst, e.g. TiO2, and may further comprise at least one layer of nanostructures, e.g. Ag comprising nanostructures, the nanostructures being covered by a polymeric shell comprising at least one layer of polymer. It is an advantage of embodiments of the present invention that long term stable nanostructures can be obtained. It is a further advantage that plasmon resonance of nanostructures, e.g. Ag nanostructures, is close to the absorption wavelength of a photocatalyst, e.g. TiO2, allowing coupling and locally increasing the electromagnetic field upon impinging UV radiation. This enhanced field in turn advantageously allows for a sharp increase in the number of charge carriers (electrons and holes) that are formed in the substrate, thereby improving photocatalytic destruction of volatile compounds.

The polymeric shell may comprise at least one layer of polyelectrolytes. It is an advantage of embodiments of the present invention that the polymers may not block the increased electromagnetic field associated by surface plasmon resonance on the silver comprising nanostructures.

The layer may comprise at least poly(allylamine hydrochloride) (PAH) and/or polyacrylic acid (PAA). It is an advantage of embodiments of the present invention that inexpensive nanostructures can be obtained.

The present invention also relates to a photocatalytic reactor for gas phase pollutant degradation, the reactor comprising a UV/Vis transparent spiral tube, coated on the inside with photocatalytic material, such as TiO2. The gas phase photocatalytic reactor may be based on a glass spiral surrounding the light source. The TiO2 material may be an easy $TiO_2$ coating, starting from commercially available $TiO_2$ and without the need of any further heat treatments. The advantages of this spiral reactor are (1) a very homogeneous light distribution over the entire reactor, (2) an intense contact between pollutants and the catalyst surface and (3) a large reaction area, and (4) the fact that it is leading to high pollutant degradation efficiency, (5) all in a very compact design.

The reactor may furthermore comprise long-term stable metal nanoparticles, protected by an ultra-thin polymer shell. The shell may be applied via a layer-by-layer (LbL) method. The metal nanoparticles typically may be Ag comprising particles. The silver comprising particles may be silver/gold alloy nanoparticles. When irradiated with light of the correct wavelength, noble metal nanoparticles display surface plasmon resonance (SPR), i.e. the coherent oscillation of the negative electron cloud against the restoring force of the positive nucleus. The resonant wavelength and SPR intensity depend on the nature of the metal, the surrounding environment, the size and the shape of the metallic nanostructures. Application of these particles results in shifting the activity window of a wide bandgap semiconductor like $TiO_2$ to the visible range of the spectrum. According to embodiments of the present invention this shift offers an innovative solution to the poor solar light response of $TiO_2$, but furthermore the quantum efficiency under visible light is also improved by working with silver/gold alloy nanoparticles thus covering the entire range of the solar spectrum. Convenient use is made of the strong electric near-field enhancement which SPR entails. The build-up of these intense local electric fields allows an efficient concentration of the incident photon energy in small volumes near the nanostructures. Since the rate of electron-hole pair formation is proportional to the intensity of the electric field, a drastic increase in charge carrier formation occurs.

In order for this plasmonic "lens effect" to work, an energy match between the bandgap energy of the semiconductor, the spectral output of the light source and the energy associated with the SPR was selected. For $TiO_2$ under UVA irradiation, this criterion is met especially for silver nanoparticles, with an SPR band around 390 nm. Furthermore, the nanostructures are provided with a shell in order to overcome stability issues. The protective shell consists of polyelectrolytes which are wrapped around the nanoparticles, e.g. based on the layer-by-layer protocol.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

**Brief description of the drawings**

FIG. 1 illustrates gas phase photocatalytic reactor designs used in the experimental study. A) schematic representation of the spiral reactor and B) photograph of the actual spiral reactor used in our study. C) schematic representation of an annular photocatalytic benchmark reactor and D) photograph of the latter as used in the experimental study illustrating advantages of embodiments of the present invention.

FIG. 2 illustrates the transmission of different $TiO_2$ coatings on glass slides as a function of the number of coating cycles with different $TiO_2$ suspensions in ethanol: 0.5 wt% suspension (O), 1 wt% (●) and 2 wt% (▼), as can be used in embodiments of the present invention.

FIG. 3 illustrates a calibration curve of transmission as a function of $TiO_2$ coverage (mg cm$^{-2}$), as can be used in embodiments of the present invention.

FIG. 4 illustrates Photocatalytic degradation of acetaldehyde (200 ppmv in air at 400 mL min$^{-1}$) using the spiral reactor coated with different suspensions of $TiO_2$ in ethanol, illustrating features of embodiments of the present invention.

FIG. 5 illustrates a photocatalytic degradation of acetaldehyde for different flow rates using different types of reactor geometries (30 ppmv in air, flow rates ranging from 200 to 2000 mL min$^{-1}$). ● indicate the spiral reactor, ▼ indicate the double coated cylinder and ○ indicate the single coated cylinder, illustrating features of embodiments of the present invention.

FIG. 6 illustrates a TEM image of a silver core-shell nanoparticle with four polyelectrolyte layers (Ag/(PAH/PAA)), as can be used in embodiments of the present invention.

FIG. 7 illustrates the degradation of Acetaldehyde with $TiO_2$ and Ag@$TiO_2$. An increase of 100% in degradation efficiency is observed upon modification of $TiO_2$ with Ag core-shell nanoparticles, illustrating advantages of embodiments of the present invention.

FIG. 8 illustrates a schematic view of a 2D spiral setup, as can be used in embodiments of the present invention.

FIG. 9 illustrates a schematic view of a reactor tube extending in different directions so as to form a substantially two dimensional pattern, as can be used in embodiments of the present invention.

FIG. 10 illustrates the degradation of Acetaldehyde with TiO2 and Ag@TiO2 in a 2D planar reactor according to an embodiment of the present invention, whereby an increase of 33% in degradation efficiency is observed upon modification of TiO2 with Ag core-shell nanoparticles.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

**Detailed description of illustrative embodiments**

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

In a first aspect, the present invention relates to a device for providing photocatalytic reaction for gas phase pollutant degradation, the reactor comprising a UV/vis transparent reactor tube for sending a gas therethrough, the UV/vis transparent reactor tube being coated on the inside with photocatalytic material as a catalyst for photocatalytic gas phase pollutant degradation, the reactor tube extending in different directions so as to form a substantially two dimensional pattern. The reactor tube has a planar two-dimensional spiral shape.

In one aspect, the present invention relates to as substrate transparent to light. The substrate comprises a surface suitable for providing photocatalytic reaction. The surface is therefore coated, the coating comprising nanostructures, e.g. Ag comprising nanostructures, and a photocatalyst, e.g. a $TiO_2$, as a catalyst for photocatalytic gas phase pollutant degradation, the nanostructures being nanostructures comprising metals such that the nanostructures display surface plasmon resonance effects.

According to some embodiments of the above aspects, the photocatalyst may be any of $TiO_2$, $ZnO$, $WO_3$ or composite materials containing a combination of these oxides and/or the nanostructures comprising metals may be nanostructures comprising any of Ag, Au, Cu, Pd, Pt or a combination thereof.

In some embodiments, the substrate is at least partially coated with the photocatalyst, e.g. TiO2, and further coated with said nanostructures, e.g. Ag comprising nanostructures, e.g. a layer of Ag comprising nanostructures, the nanostructures being covered by a polymeric shell comprising at least one layer of polymer.

In a second aspect, the present invention relates to a method for obtaining a catalytic surface, the method comprising the steps of

- providing a substrate transparent to light, the substrate comprising a surface,
- depositing nanostructures and a photocatalyst on the substrate as a catalyst for photocatalytic gas phase pollutant degradation, the nanostructures being nanostructures comprising metals such that the nanostructures display surface plasmon resonance effects. The photocatalyst may be any of $TiO_2$, ZnO, $WO_3$ or composite materials containing a combination of these oxides and/or the nanostructures comprising metals may be nanostructures comprising any of Ag, Au, Cu, Pd, Pt or a combination thereof.

In some embodiments, depositing nanostructures, e.g. Ag comprising nanostructures, and a photocatalyst, e.g. TiO2, comprises

- providing a photocatalyst, e.g. TiO2, coating on the substrate,
- obtaining said nanostructures, e.g. nanostructures comprising Ag, the nanostructures being covered by a polymeric shell, the shell comprising at least one polymeric layer, and
- providing a further coating on the substrate with the nanostructures.

Further features and advantages of the first and second aspect will further be illustrated with reference to experimental results obtained and described below, embodiments not being limited thereto.

By way of illustration, embodiments of the present invention not being limited thereby, the results of an experimental study of photocatalytic degradation for gas phase pollutants using a spiral photocatalytic reactor and/or a metal nanoparticle including photocatalytic material are discussed below. The latter illustrates features and advantages of at least some embodiments of the present invention.

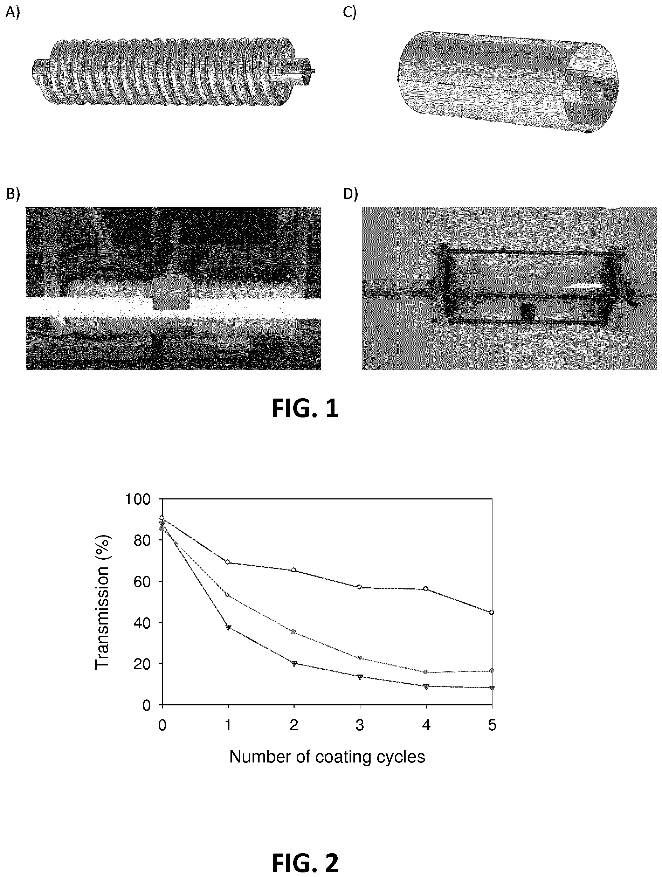

First the experimental setup and design will be discussed. The gas phase reactor for the present study was constructed using a spiral tube, transparent for both visible and UV light, in which a lamp was placed longitudinally in the center as schematically depicted in FIG. 1(A). The reactor internal diameter and length can be varied over a large range. FIG. 1(B) depicts an example of a glass spiral reactor with an internal diameter of 4 mm and a total length of 2620 mm, that is hand-blown into a spiral of 200 mm length and 48 mm width as outer dimensions.

To benchmark the results of the spiral reactor, an annular reactor of the same outer dimensions as the spiral reactor was also constructed. This annular reactor is schematically depicted in FIG. 1(C) and consists of two concentric cylinders, one outer cylinder of 48 mm and an inner cylinder of 24 mm, both 200 mm long. Both ends were sealed with butyl rubbers sandwiched between a dedicated closing mechanism to ensure airtightness (FIG. 1(D)). The same lamp as for the spiral reactor is positioned longitudinally in the center.

In the present study, silver nanoparticles were used for obtaining improved efficiency. The synthesis of silver nanoparticles was based on the procedure described by Bastús et al. in Chem. Mater. 26 2836-2846 (2014). A 100 mL aqueous solution of sodium citrate (5 mM) and tannic acid (0.05 mM) was heated under vigorous stirring until boiling commenced. At this point, 1 mL of a 25 mM aqueous silver nitrate ($AgNO_3$) solution was added and left boiling for 30 min. Immediately after the addition of $AgNO_3$, the solution became bright yellow. To remove the excess of tannic acid and citrate, the batch was centrifuged at 12,000 g for 30 min and the resulting nanoparticles were redispersed in 25 mL Milli-Q-water ($\rho$ = 18.2 M$\Omega$). Tannic acid is used to control the size of the Ag seeds. With this technique, nanoparticles can be synthesized in a large range of diameters.

Colloidal $Au_xAg_{(1-x)}$ spherical nanoparticles can be synthesized using a modified Turkevich procedure. In this method, appropriate amounts of $HAuCl_4 \cdot 3H_2O$ and $AgNO_3$ precursor solutions are diluted to avoid precipitation of AgCl, mixed and brought to boil after which citrate is added as both the reducing and stabilizing agent. By altering the amount of gold ions, i.e. the amount of $HAuCl_4.3H_2O$, and silver ions, i.e. $AgNO_3$, the ratio of gold versus silver can be varied. Fabrication of more intricate, 'cornered' nanostructures (cubes, stars, prisms,...) is more challenging. The advantage of this type of nanostructures is that plasmonic hot spots are the strongest at spikes or corners. Fabrication of silver and Au@Ag nanocubes has been described by Goris et al. from the EMAT group of the University of Antwerp in J. Phys. Chem. C 118 (2014) 15356-15362. Nanostars are another interesting category of 'pointy' nanostructures. Fales et al. reported in J. Phys. Chem. C 118 (2014) 3708 - 3715 on the synthesis of gold nanostars and silver-coated gold nanostars. There is also evidence for the synthesis of bare silver nanostars, fabricated in a two-stage process. It is possible to modify these synthesis strategies by mixing gold and silver precursors to obtain alloyed nanostructures, similar to what was done for modifying the Turkevich procedure for spherical gold nanoparticles.

To avoid oxidation and aggregation of metal nanoparticles, a core-shell structure of polymers based on the LBL method was applied. The silver core-shell particles were constructed using stock solutions of polyelectrolytes polyallylamine hydrochloride (PAH, Mwt 17.5 KDa, Sigma-Aldrich) and polyacrylic acid (PAA, MW 2 KDa, Sigma-Aldrich) prepared in Mili-Q-water. Prior to use, the polymer solutions were sonicated for 30 min. For the deposition of the first polyelectrolyte layer, i.e. PAH, 25 mL of silver colloidal solution was added drop-wise to 13 mL of 5 g/L PAH in a glass vial under vigorous stirring, which continued for 20 min under dark conditions at room temperature. The resulting PAH capped silver nanoparticles were centrifuged (12,000 g) for 40 min in 1.5 mL Eppendorf tubes in order to remove the excess polyelectrolyte. The particles were redispersed in Milli-Q water as a washing step, centrifuged once more and finally the obtained colloids were again redispersed in 25 mL of Milli-Q-water. The deposition of the second layer was achieved using 10 g/L PAA using a similar approach as for the first layer, only the centrifugation speed was lowered (10,000 g) to avoid the formation of hard pellets. The procedure was repeated until silver nanoparticles were obtained with four polymer layers. A FEI Tecnai Transmission Electron Microscope (TEM) operated at 200 kV was used to visualize the core-shell structure of nanoparticles. The same procedure can be followed for the synthesis of other types of metal nanostructures such as gold or silver/gold alloys including different shapes such as cubes, triangles, stars,...

The photocatalytic degradation of air pollutants is studied under ambient conditions. Acetaldehyde is studied as a model compound. Firstly, the TiO2 coating was introduced in the spiral photoreactor via an easy and affordable coating protocol. An important design feature is the optimization of the catalyst loading in conjunction with the resulting light transparency of the coated surface. Rather than performing thickness measurements, the optimization method was purely based on light transmission. In order to establish the most ideal coating conditions, different glass slides were coated with three different suspensions of TiO2 in ethanol (0.5, 1 and 2 wt%) by pouring 3 mL of the suspension over the glass slide in one smooth motion, dried at 25°C for 6 h and then the transmission of UV light passing through the glass slides was measured using a calibrated spectroradiometer (Avantes Avaspec). The coating procedure was repeated to introduce higher catalyst loadings. Using this approach the goal was to obtain a coating condition that results in 50% light transmission which is considered optimal since both in the spiral and annular reactors, emitted photons are assumed to cross two coating layers before exiting the geometry. The results of the 'coating-transmission calibration' in FIG. 2 show that one coating cycle using a 1 wt% suspension resulted in approximately 50% transmission, as required.

For coating the spiral reactor, 237 mg of $TiO_2$ P-25 (Evonik) was added to 30 mL of ethanol to obtain a 1 wt% suspension and stirred ultrasonically for 30 min. The suspension was poured in one smooth motion through the spiral reactor to obtain a thin semi-transparent white layer of $TiO_2$. It was verified that the appearance of the coating was indeed similar to what was obtained by coating a planar glass slide with the same 1 wt% suspension. To remove the solvent, a continuous air flow was sent through the reactor overnight in the presence of UV light (leading to photocatalytic degradation of adsorbed ethanol).

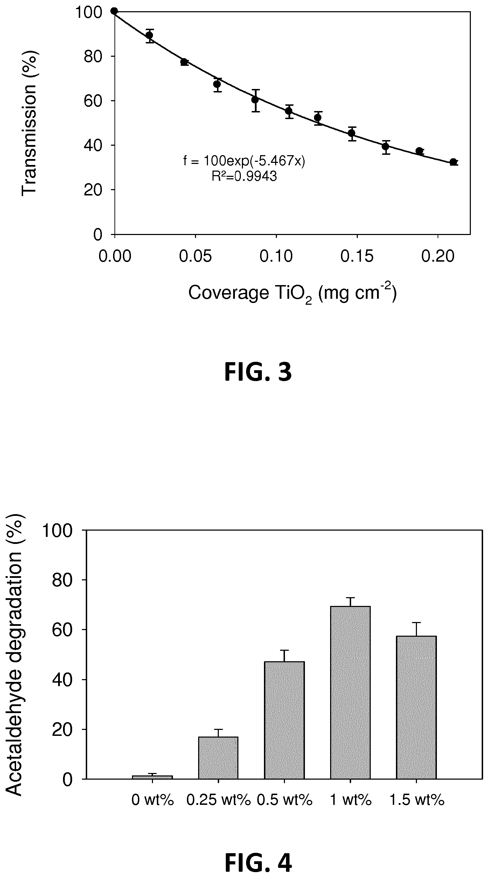

The procedure described above resulted in a catalyst coverage of $0.020 \pm 0.001$ mg cm$^{-2}$ (corresponding to a total catalyst loading of $6.6 \pm 0.4$ mg in the entire reactor). The latter is determined by constructing a calibration curve that relates UV LED light transmission to well-known surface coverages of $TiO_2$ on glass, obtained by (repeated) drop casting of known amounts of a very well dispersed 0.05 wt% $TiO_2$ suspension in ethanol on cleaned cover slips (FIG. 3).

Deposition of polymer-capped silver nanoparticles was achieved by simply pouring the as-obtained colloidal solution as obtained with the technique described above through the coated spiral reactor once. The reactor was dried overnight by flushing with air. Quantization of the total metal loading on $TiO_2$ was, unfortunately, not feasible under these conditions.

The reactor (as shown in FIG. 1B) was mounted on a fully automated photocatalytic gas test setup. In all tests, acetaldehyde was selected as target pollutant (Messer, 1% in $N_2$). The total flow rate was altered between 200 and 2000 mL min$^{-1}$ to investigate the effect on the degradation efficiency. Depending on the experiment, the inlet concentration of acetaldehyde was set at 30 ppmv, 200 ppmv or 400 ppmv, as will be specified below. The degradation of acetaldehyde was determined as the steady state concentration of $CO_2$ produced under UV illumination, over twice the acetaldehyde inlet concentration (as two moles of $CO_2$ are produced per mole of acetaldehyde).

For the validation of the spiral photocatalytic reactor, the efficiency was compared with an annular reactor of the same outer dimensions and identical catalyst loading. Two different cases were considered for this annular reactor. In the first case, only the inner wall of the outer cylinder was coated with 30 mL of a 1.1 wt% suspension of TiO2 in ethanol to result in the same total amount of TiO2 as present in the spiral reactor (6.6 mg). In the second case, both the inner wall of the outer cylinder, as well as the outer wall of the inner cylinder were coated. In that case both cylinders were coated with a 0.73 wt% suspension of TiO2 in 30 mL ethanol that again resulted in the same total amount of TiO2 as in the spiral reactor (6.6 mg).

Following results were obtained :

At first, our hypothesis of achieving an optimal catalyst coating by calibrating the resulting light transmission was verified. The idea was to aim for 50% transmission, since the light roughly has to cross two coated surfaces. A single coating step with a 1 wt% suspension of $TiO_2$ P25 in ethanol leads to this transmission target of 50%. This hypothesis was proven experimentally by coating the spiral reactor with increasing amounts of $TiO_2$ and measuring the resulting photocatalytic degradation of 200 ppmv acetaldehyde at a total flow rate of 400 mL min$^{-1}$. The results in FIG. 4 clearly illustrate that the degradation efficiency increases when increasing the suspension concentration up to 1 wt%, which can be explained by more effective use of incident photons by the increasing amount of catalyst present in the reactor. After reaching a maximum for the 1 wt% suspension, the degradation efficiency again drops for the 1.5 wt% suspension, which is attributed to an excessive amount of coating that blocks (scatters) part of the incident photon flux and prevent full photo-activation of the inner spiral surface in contact with the pollutants.

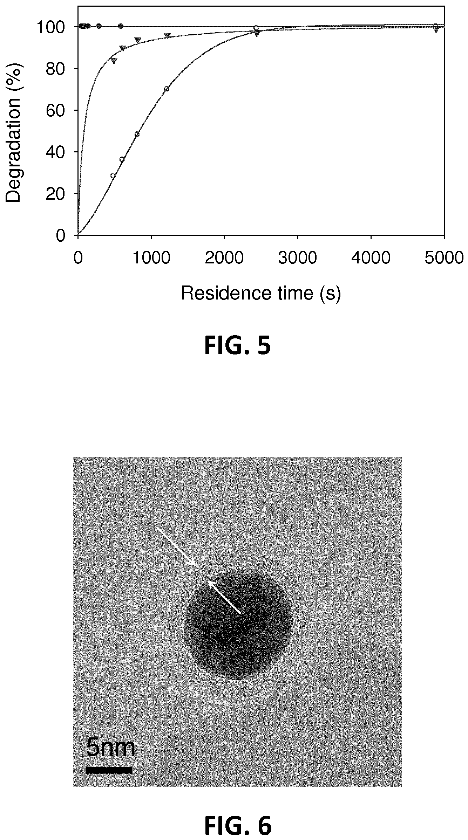

The photocatalytic activity of the two different reactor geometries (spiral *versus* annular) were compared towards the photocatalytic degradation of acetaldehyde. In these experiments, the concentration of acetaldehyde was kept constant at 30 ppmv while the total volumetric flow rate was altered between 200 mL min$^{-1}$ and 2000 mL min$^{-1}$, which are the extrema of our setup. Since our aim was to compare reactor geometries of the same outer dimensions, both the spiral and the annular reactors were 200 mm long and 48 mm wide. Since the annular type reactor is composed of two cylinders, the most evident way to compare it with the spiral reactor is to coat both cylinders. The outer cylinder only coated from the inside and the inner cylinder only coated on the outside. This means, however, that although the amount of catalyst was kept the same, i.e. 6.6 mg, the total available surface was significantly larger for the annular reactor than for the spiral reactor (452 cm$^2$ and 329 cm$^2$ respectively). Alternatively, only the outer cylinder of the annular reactor was coated from the inside. This way, a total amount of 6.6 mg TiO$_2$ was coated on a surface of 302 cm$^2$ which is very close to the total available surface of the spiral reactor. All geometrical parameters are summarized in Table 1. As can be derived from the results in FIG. 5, the spiral reactor outperforms both the single coated cylinder and the double coated cylinder over the entire set of reaction conditions. Although the outer dimensions of the reactor are identical, the internal volumes are not. For the annular reactor, the volume is 271 cm$^3$ whereas the reactor volume of the spiral is only 33 cm$^3$. This means that the residence time of acetaldehyde in the spiral reactor is about 8 times shorter than for the annular reactor. In other words, the same amount of acetaldehyde is flowing through the spiral reactor 8 times as fast as through the annular reactor and still the degradation efficiency is significantly higher, especially at higher flow rates (i.e. shorter residence time). It can thus be concluded that the spiral reactor provides a very compact solution for the effective and fast degradation of VOC in a short period as compared to conventional photocatalytic reactor types. This outstanding performance is attributed to (1) homogeneous illumination over the entire reactor length, (2) with a coated layer optimized towards light transmission, and (3) intense (yet short) contact between gaseous reagents and the irradiated surface over the entire spiral length due to the narrow tube diameter.

**Table 1.** Parameters of the different photocatalytic reactor designs

|  | Length (cm) | Reactor volume (cm$^3$) | Catalyst loading (mg) | Coated surface (cm$^2$) |
|---|---|---|---|---|
| **Spiral** | 20 | 33 | 6.6 ± 0.4 | 329 |
| **Annular** | 20 | 271 | 6.6 ± 0.4 | 302[a] |
|  |  |  |  | 452[b] |

[a]If only the outer cylinder is coated; [b]If both inner and outer cylinder are coated

Finally, silver nanoparticles, stabilized by four polymer layers (Ag/(PAH/PAA)) were added to the TiO$_2$ coating in the spiral reactor. FIG. 6 shows a TEM image in which a thin, uniform polymer shell is clearly visible. This image shows the degree of nanometer-level control on the thickness of the polymer shell that is offered by the LbL method.

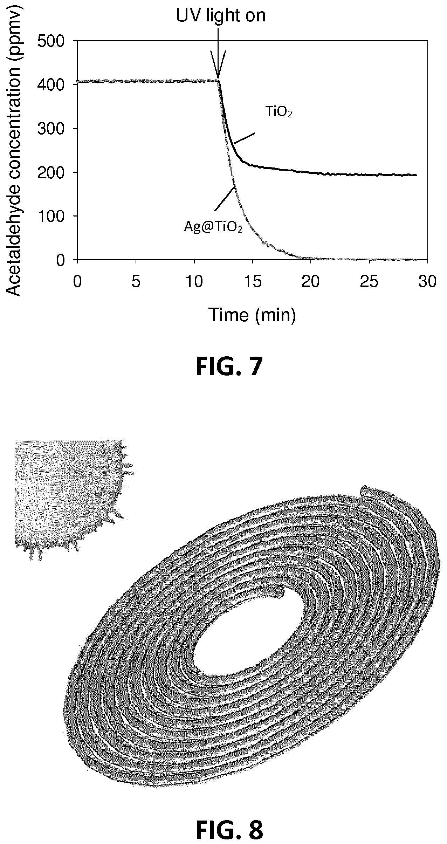

The degradation of acetaldehyde was again used as a test to evaluate the difference between bare TiO$_2$ and silver-modified TiO$_2$. In these experiments a total flow rate of 200 mL min$^{-1}$ was used with an acetaldehyde concentration of 400 ppmv. A drastic increase in the inlet concentration was required since for the 30 ppmv inlet concentration in the experiments above 100% acetaldehyde degradation was already achieved over the entire flow regime. The results show that under these conditions the TiO$_2$-coated spiral results in 50% acetaldehyde degradation. Upon addition of LbL-stabilized silver nanoparticles, an activity increase of 100% is obtained and complete removal of acetaldehyde is achieved. This is attributed to the enhanced electric near-field accompanied by SPR on these protected silver nanoparticles under UV illumination. The core-shell silver nanoparticles show a plasmon band around 400 nm which overlaps with the TiO$_2$ P25 absorption spectrum and therefore an increased number of charge carriers is generated that result in a higher photocatalytic activity. The degradation behavior is shown in FIG. 7.

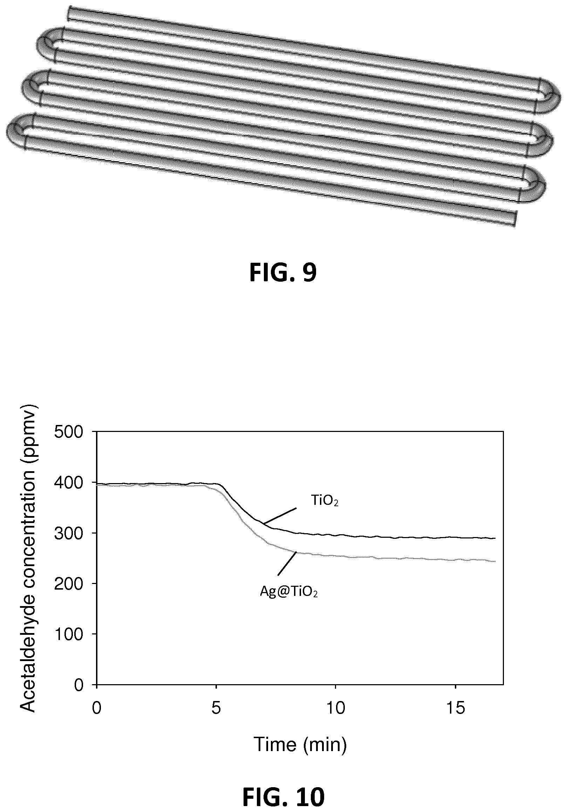

The addition of gold or silver/gold alloy nanostructures would not only enable to harvest UV photons, but photons from the entire UV/Vis region of the solar spectrum, as we recently showcased by means of a 'rainbow' broadband plasmonic catalyst. For the effective harvesting of solar photons a slight variation on the reactor geometry shown earlier may be used by translating a 3D spiral (helix) to a planar 2D spiral that can be oriented directly towards the sun in FIG. 8. Another example of a planar 2D reactor tube is illustrated in FIG. 9. The reactor used in experiments for evaluating the 2D reactor tube is configured as shown in FIG. 9. It consists of 15 tubes, each having a length of 250 mm and being connected with short turns to form a 3750 mm long reaction tube.

By way of illustration, efficiency of the 2D planar configuration is illustrated below, referring to some experimental results. The experiment as performed for the 3D spiral reactor was repeated for the 2D planar configuration. 400 ppmv acetaldehyde was fed to the reactor at a total flow rate of 200 mL min-1. The degradation efficiency of this 2D spiral reactor (ca. 27%) was lower than the corresponding 3D spiral (50%) but the intensity of the UV lamps has to be taken into account. In the case of the 3D spiral, 4.2 mW/cm$^2$ UV lamps were used, whereas in the case of the 2D spiral one was only able to use UV lamps of 1.1 mW/cm$^2$. Upon addition of core-shell stabilized silver nanoparticles, an activity increase of 33% was achieved leading to a degradation efficiency of 36%.

In addition, formal quantum efficiencies (FQE) were calculated using the following equation:

$$FQE = \frac{\text{\# molecules acetaldehyde converted}}{\text{\# incident photons}}$$

The results are listed in the table below. The FQE for the bare TiO2 is very similar for the 2D spiral and the 3D spiral. For the silver modified catalyst, the FQE is clearly increased especially in the case of the 3D spiral reactor. According to Sopyan et al.22 10 holes are needed for a complete photocatalytic degradation of acetaldehyde following the equation below:

$$CH_3CHO + 3H_2O + 10h^+ \rightarrow 2CO_2 + 10H^+$$

Since already 10 excitation events are needed for a complete degradation, the maximum achievable quantum efficiency can be only 10%. One achieves an apparent efficiency that is one order of magnitude higher compared to literature reported values.

|  | 2D spiral | | 3D spiral | |
| --- | --- | --- | --- | --- |
|  | TiO2 | Ag@TiO2 | TiO2 | Ag@TiO2 |
| FQE (%) | 0.66 | 0.89 | 0.7 | 1.4 |

Formal quantum efficiencies for the degradation of acetaldehyde.

The above results illustrate the advantageous effects of a 2D planar configuration.

According to some embodiments, the device for providing photocatalytic reaction for gas phase pollutant degradation comprises at least one mirror surface positioned at one side of the reactor so as to reflect radiation towards the reactor tube. Radiation that has travelled through the reactor tube can then be redirected so that it passes a further time through the reactor and thus has an increased effect on creating a photocatalytic reaction. In some embodiments, the reactor tube and the radiation source may be embedded in a box with mirroring walls so as to optimally use the radiation for inducing photocatalytic reactions. According to some embodiments the device can advantageously also be combined with other applications, such as for example a planar shaped photocatalytic reactor could be combined with photovoltaic cells. The reactor tube could thus be on top of the photovoltaic cells, absorbing part of the radiation for photocatalytic reaction, while the remaining part of the radiation could be captured by photovoltaic cells.

## Claims

1. A device for providing photocatalytic reaction for gas phase pollutant degradation, the reactor comprising a UV/vis transparent reactor tube for sending a gas therethrough, the UV/vis transparent reactor tube being coated on the inside with photocatalytic material as a catalyst for photocatalytic gas phase pollutant degradation, the reactor tube has a planar two-dimensional spiral shape.

2. A device for providing photocatalytic reaction according to any of the previous claims, wherein the photocatalytic material is any of $TiO_2$, ZnO, $WO_3$ or composite materials containing a combination of these oxides.

3. A device for providing photocatalytic reaction according to any of the previous claims, wherein the coating on the reactor furthermore comprises nanostructures comprising metals such that the nanostructures display surface plasmon resonance effects, the nanostructures comprising metals being nanostructures comprising any of Ag, Au, Cu, Pd, Pt or a combination thereof.

4. A device for providing photocatalytic reaction according to claim 3, wherein the nanostructures are covered by a polymeric shell comprising at least one layer of polymer.

5. A device for providing photocatalytic reaction according to any of the previous claims, the device comprising Ag nanostructures and $TiO_2$ photocatalytic material.

6. A photocatalytic reactor system comprising a device for providing photocatalytic reaction according to any of claims 1 to 5.

7. A photocatalytic reactor system according to claim 6, wherein the system comprises a plurality of devices for providing photocatalytic reaction according to any of claims 1 to 6, the devices for providing photocatalytic reaction being arranged parallel to each other.

8. A photocatalytic reactor system according to claim 7, wherein the reactor tubes of the different devices for providing photocatalytic reaction are interconnected with each other so as to form a single reactor tube.

9. A photocatalytic reactor system according to any of claims 6 to 8, wherein in between the devices for providing photocatalytic reaction planar radiation sources are positioned.

10. Use of a system according to any of the claims 6 to 9 for photocatalytic gas phase pollutant degradation.

11. The use according to claim 10, wherein the photocatalytic gas phase pollutant degradation is based on sunlight.


**Patentansprüche**

1. Eine Vorrichtung zur Bereitstellung einer photokatalytischen Reaktion für den Schadstoffabbau in der Gasphase, wobei der Reaktor ein UV/vis transparentes Reaktorrohr zum Senden eines Gases dort hindurch umfasst, wobei das UV/vis transparente Reaktorrohr an der Innenseite mit photokatalytischem Material als Katalysator für den photokatalytischen Schadstoffabbau in der Gasphase beschichtet ist, das Reaktorrohr eine ebene, zweidimensionale Spiralform aufweist.

2. Eine Vorrichtung zur Bereitstellung einer photokatalytischen Reaktion nach einem der vorstehenden Ansprüche, wobei das photokatalytische Material eines aus $TiO_2$, ZnO, $WO_3$ oder Verbundmaterialien ist, die eine Kombination dieser Oxide enthalten.

3. Eine Vorrichtung zur Bereitstellung einer photokatalytischen Reaktion nach einem der vorstehenden Ansprüche, wobei die Beschichtung auf dem Reaktor weiter Nanostrukturen umfasst, die Metalle umfassen, sodass die Nanostrukturen Oberflächenplasmonenresonanzeffekte anzeigen, wobei die Nanostrukturen, die Metalle umfassen, die Nanostrukturen sind, die Ag, Au, Cu, Pd, Pt oder eine Kombination davon umfassen.

4. Eine Vorrichtung zur Bereitstellung einer photokatalytischen Reaktion nach Anspruch 3, wobei die Nanostrukturen von einer Polymerhülle bedeckt sind, die mindestens eine Polymerschicht umfasst.

5. Eine Vorrichtung zur Bereitstellung einer photokatalytischen Reaktion nach einem der vorstehenden Ansprüche, wobei die Vorrichtung Ag-Nanostrukturen und photokatalytisches $TiO_2$-Material umfasst.

6. Ein photokatalytisches Reaktorsystem, das eine Vorrichtung zur Bereitstellung einer photokatalytischen Reaktion nach einem der Ansprüche 1 bis 5 umfasst.

7. Eine photokatalytisches Reaktorsystem nach Anspruch 6, wobei das System eine Vielzahl von Vorrichtungen zur Bereitstellung einer photokatalytischen Reaktion nach einem der Ansprüche 1 bis 6 umfasst, wobei die Vorrichtungen zur Bereitstellung einer photokatalytischen Reaktion parallel zueinander angeordnet sind.

8. Eine photokatalytisches Reaktorsystem gemäß Anspruch 7, wobei die Reaktorrohre der verschiedenen Vorrichtungen zur Bereitstellung einer photokatalytischen Reaktion miteinander verbunden sind, um ein einziges Reaktorrohr zu bilden.

9. Eine photokatalytisches Reaktorsystem nach einem der Ansprüche 6 bis 8, wobei zwischen den Vorrichtungen zur Bereitstellung einer photokatalytischen Reaktion planare Strahlungsquellen positioniert sind.

10. Verwendung eines Systems nach einem der Ansprüche 6 bis 9 zum photokatalytischen Schadstoffabbau in der Gasphase.

**11.** Verwendung nach Anspruch 10, wobei der photokatalytische Schadstoffabbau in der Gasphase auf Sonnenlicht basiert.

**Revendications**

**1.** Un dispositif pour fournir une réaction photocatalytique pour la dégradation de polluants en phase gazeuse, le réacteur comprenant un tube de réacteur transparent aux UV/vis pour faire passer un gaz à travers celui-ci, le tube de réacteur transparent aux UV/vis étant revêtu à l'intérieur d'un matériau photocatalytique en tant que catalyseur pour la dégradation de polluants en phase gazeuse par photocatalyse, le tube de réacteur ayant une forme spirale bidimensionnelle plane.

**2.** Un dispositif pour fournir une réaction photocatalytique selon l'une quelconque des revendications précédentes, dans lequel le matériau photocatalytique est l'un quelconque de $TiO_2$, ZnO, $WO_3$ ou des matériaux composites contenant une combinaison de ces oxydes.

**3.** Un dispositif pour fournir une réaction photocatalytique selon l'une quelconque des revendications précédentes, dans lequel le revêtement sur le réacteur comprend en outre des nanostructures comprenant des métaux de sorte que les nanostructures affichent des effets de résonance plasmonique de surface, les nanostructures comprenant des métaux étant des nanostructures comprenant l'un quelconque de Ag, Au, Cu, Pd, Pt ou une combinaison de ceux-ci.

**4.** Un dispositif pour fournir une réaction photocatalytique selon la revendication 3, dans lequel les nanostructures sont recouvertes d'une coque polymérique comprenant au moins une couche de polymère.

**5.** Un dispositif pour fournir une réaction photocatalytique selon l'une quelconque des revendications précédentes, le dispositif comprenant des nanostructures d'Ag et un matériau photocatalytique $TiO_2$.

**6.** Un système de réacteur photocatalytique comprenant un dispositif pour fournir une réaction photocatalytique selon l'une quelconque des revendications 1 à 5.

**7.** Un système de réacteur photocatalytique selon la revendication 6, dans lequel le système comprend une pluralité de dispositifs pour fournir une réaction photocatalytique selon l'une quelconque des revendications 1 à 6, les dispositifs pour fournir une réaction photocatalytique étant disposés parallèlement les uns aux autres.

**8.** Un système de réacteur photocatalytique selon la revendication 7, dans lequel les tubes de réacteur des différents dispositifs pour fournir une réaction photocatalytique sont interconnectés entre eux de manière à former un seul tube de réacteur.

**9.** Un système de réacteur photocatalytique selon l'une quelconque des revendications 6 à 8, dans lequel entre les dispositifs pour fournir une réaction photocatalytique, des sources de rayonnement plan sont positionnées.

**10.** Utilisation d'un système selon l'une quelconque des revendications 6 à 9 pour la dégradation de polluants en phase gazeuse par photocatalyse.

**11.** L'utilisation selon la revendication 10, dans laquelle la dégradation de polluants en phase gazeuse par photocatalyse est basée sur la lumière du soleil.

A)

C)

B)

D)

**FIG. 1**

**FIG. 2**

**FIG. 3**

**FIG. 4**

**FIG. 5**

**FIG. 6**

**FIG. 7**

**FIG. 8**

**FIG. 9**

**FIG. 10**

**EP 3 528 940 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1435263 A1
- EP 1415707 A1
- US 6558639 B1

**Non-patent literature cited in the description**

- **ASAPU, RAMESH et al.** Silver-polymer core-shell nanoparticles for ultrastable plasmon-enhanced photocatalysis. *Applied Catalysis B: Environmental*, 2017, vol. 200, 31-38
- **BASTÚS et al.** *Chem. Mater.*, 2014, vol. 26, 2836-2846
- **GORIS et al.** *J. Phys. Chem. C*, 2014, vol. 118, 15356-15362
- **FALES et al.** *J. Phys. Chem. C*, 2014, vol. 118, 3708-3715